(19) Europäisches Patentamt
European Patent Office
Office européen des brevets

(11) **EP 2 046 053 A1**

(12) **EUROPEAN PATENT APPLICATION**

(43) Date of publication:
**08.04.2009 Bulletin 2009/15**

(51) Int Cl.:
*H04N 7/34* (2006.01)  *H04N 7/50* (2006.01)
*H04N 7/26* (2006.01)

(21) Application number: **07301436.7**

(22) Date of filing: **05.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Thomson Licensing**
**92100 Boulogne-Billancourt (FR)**

(72) Inventors:
• **Chen, Qu Qing**
**100085 Beijing (CN)**

• **Chen, Zhi Bo**
**100085 Beijing (CN)**
• **Gu, Xiao Dong**
**100085 Beijing (CN)**

(74) Representative: **Rittner, Karsten**
**Deutsche Thomson OHG**
**European Patent Operations**
**Karl-Wiechert-Allee 74**
**30625 Hannover (DE)**

(54) **Method and device for adaptively quantizing parameters for image coding**

(57)    Image or video encoding standards provide different intra prediction modes, which may employ a spatial intra prediction direction and a DFT. Picture encoding is further optimized by an adaptive quantization of the frequency domain parameters. A method for quantizing or inverse quantizing frequency domain parameters that refer to a residual, which is the difference between a current image and a predicted image, is disclosed. If the predicted image was obtained by spatial intra prediction (10) using an intra-prediction direction, one of a plurality of different quantization matrices is selected (14) and used for quantizing (13) or inverse quantizing said parameters. The selection depends on the intra-prediction direction (s10) that was used. As a result, for images with horizontal prediction direction the quantization is finer for horizontal structures than for vertical structures, and vice versa. Advantageously, no extra header bits need to be introduced to indicate the de-quantization matrices.

Fig.3

EP 2 046 053 A1

**Description**

Field of the invention

This invention relates to a method for adaptively quantizing parameters for image coding, and a corresponding device.

Background

To de-correlate the pixels in a block and thus facilitate the compression of prediction error, Discrete Cosine Transform (DCT) is used in both video and image coding. Due to the probability distribution and correlation of pixels in a block, its DCT coefficients render significant statistical characteristics, i.e. the concentration of coefficients to the upper-left corner of the frequency domain block. Furthermore, because the human eye is more sensitive to changes in low-frequency components than to high-frequency ones, the DCT coefficients are quantized using non-uniform quantization parameters, with a different quantization step sizes. Generally, low-frequency coefficients are assigned relatively smaller step sizes.

Tab.1: Luminance quantization table used in MPEG-2

| 8 | 16 | 19 | 22 | 26 | 27 | 29 | 34 |
|----|----|----|----|----|----|----|----|
| 16 | 16 | 22 | 24 | 27 | 29 | 34 | 37 |
| 19 | 22 | 26 | 27 | 29 | 34 | 34 | 38 |
| 22 | 22 | 26 | 27 | 29 | 34 | 37 | 40 |
| 22 | 26 | 27 | 29 | 32 | 35 | 40 | 48 |
| 26 | 27 | 29 | 32 | 35 | 40 | 48 | 58 |
| 26 | 27 | 29 | 34 | 38 | 46 | 56 | 69 |
| 27 | 29 | 35 | 38 | 46 | 56 | 69 | 83 |

An example of a luminance quantization table used in the MPEG-2 standard is shown in Tab.1. The same idea, a non-uniform quantization matrix, was also included in JPEG.

However, for matters of simplicity, this non-uniform quantization method was not adopted in H.264 (also known as AVC). Instead a quantization method with equal quantization step sizes was used for every $4 \times 4$ block. This has left vacancy for new coding standard to search better performance. Therefore, several non-uniform quantization methods were again studied and proposed to further explore the coding gain of the H.264 as an extension.

Lu, Chen et al.[1] proposed a weighted quantization method which was later adopted into H.264 High profile. However, the weighted quantization matrices in H.264 High profile are adaptively changed only on sequence level and picture level, not on block level. There are eight kinds of weighted quantization matrices, which are called scaling lists in H.264 High profile. They are Sl_4x4_Intra_Y, Sl_4x4_Intra_Cb, Sl_4x4_Intra_Cr, Sl_4x4_Inter_Y, Sl_4x4_Inter_Cb, Sl_4x4_Inter_Cr, Sl_8x8_Intra_Y, Sl_8x8_Inter_Y. It means the best quantization matrices vary with transform block size, intra or inter, and Y/Cb/Cr.

[1] J. Lu, T. Chen, et al, "Proposal of quantization weighting for H.264/MPEG-4 AVC Professional Profiles", JVT-K029r1, March 2004

Then, Tanizawa and Chujoh[2] employed the adaptive weighted quantization method on macroblock (MB) level. They proposed a combination of quantization methods, selecting the best out of four candidate matrices, MB by MB. After this, the Rate-Distortion Optimization (RDO) method is performed to determine which quantization matrix fits the MB best and the flag indicating the matrix is written to the header of the MB in the H.264 coding stream.

[2] A. Tanizawa, T. Chujoh, "Adaptive Quantization Matrix Selection", ITU-T Q.6/SG16 VCEG, D.266, April 2006

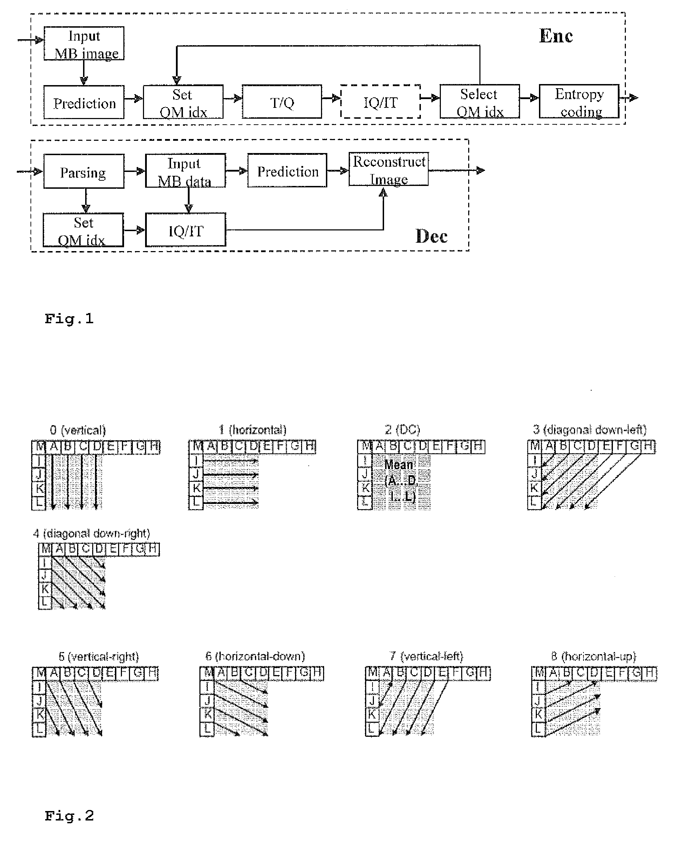

As an improvement, the same authors[3] reduced the number of candidate matrices from 4 to 2: one is a flat quantization matrix $WS_{Flat}$, and the other is a non-flat diagonal symmetric matrix $WS_{MatrixA}$, as shown in eq. (1). Accordingly the side information of each MB is reduced from 2 to 1 bit. The decoder receives the quantization matrix index and can perform inverse quantization using the same quantization matrices as the encoder. Fig.1 shows block diagrams of the encoder and decoder proposed by ref's.[2,3].

$$WS_{Flat}(i,j) = \begin{bmatrix} 16 & 16 & 16 & 16 \\ 16 & 16 & 16 & 16 \\ 16 & 16 & 16 & 16 \\ 16 & 16 & 16 & 16 \end{bmatrix} \quad WS_{MatrixA}(i,j) = \begin{bmatrix} 17 & 18 & 19 & 20 \\ 18 & 19 & 20 & 21 \\ 19 & 20 & 21 & 22 \\ 20 & 21 & 22 & 23 \end{bmatrix} \quad (1)$$

[3] A. Tanizawa, T. Chujoh, "Simulation results of Adaptive Quantization Matrix Selection on KTA software", ITU-T Q. 6/SG16 VCEG-AC07, July 2006

The above mentioned quantization methods have used non-uniform quantization matrices, together with the simplest uniform quantization matrices, and they are adaptively selected from the sequence level, to picture level, and then to slice level, and finally to MB level. Therefore, the coding performance gain is improved although the side information is also increased.

Further, it has been found that the prediction modes, especially intra prediction modes, are highly correlated with the statistic distribution of the transformed coefficients. That means that the prediction mode selection has direct influence on the distribution of the prediction error, and thus the encoded bit stream. Fan, Lu and Gao[4] developed a DCT coefficient scan method based on this intrinsic correlation between the statistical distribution of coefficients and the prediction modes. The different intra prediction modes in H.264 are shown in Fig.1.

[4] X. Fan, Y. Lu, W. Gao, "A novel coefficient scanning scheme for directional spatial prediction-based image compression", ICME 2003

However, the coding performance can still be improved if some other statistic properties are introduced.

Summary of the Invention

It has been found that an important limitation of the above-mentioned known quantization matrices lies in their diagonal symmetry. From the probability point of view, the distribution of pixel values in a block after DCT does not follow a diagonal symmetry mode. For example, Tab.2 shows the statistical DCT coefficient distribution of the intra prediction error of a sequence that was encoded using the mode_0 (i.e. vertical intra prediction) specified in H.264/AVC.

Tab.2: DCT coefficient distribution of vertical intra prediction (foreman.cif).

| | | | |
|---|---|---|---|
| 5060270 | 170725 | 34766 | 18798 |
| 112049 | 43858 | 18185 | 3516 |
| 21076 | 16231 | 9760 | 1943 |
| 15006 | 10662 | 3629 | 270 |

As can be seen in Tab.2, the coefficients in the uppermost row, representing horizontal frequency components of the prediction error, have significantly higher weight than other positions.

Tab.3 shows the respective distribution of mode_1 (i.e. horizontal intra prediction mode) specified in H.264/AVC.

Tab.3: DCT coefficient distribution of horizontal intra prediction (foreman.cif).

| | | | |
|---|---|---|---|
| 4190205 | 83191 | 14530 | 9475 |
| 174361 | 49058 | 16660 | 8118 |
| 49349 | 46546 | 15335 | 2019 |
| 27462 | 17501 | 7627 | 2126 |

As can be seen in Tab.3, the coefficients in the leftmost row, representing vertical frequency components of the prediction error, have significantly higher weight than other positions. According to the invention, a better result can be achieved if the quantization step size is differentiated according to the pixel weight of the coefficients, e.g. with quantization matrices that are not diagonally symmetrical. Thus, by further exploring the relationship between the quantization matrices and the intra prediction modes, more coding gain can be achieved.

This invention proposes an adaptive quantization matrix selection method for video/image compression. Statistically, the probability distribution of prediction errors in a block conforms to an increasing gradient which varies with the block's prediction modes. Particularly, in intra block coding, the intra prediction modes have decisive effect on the prediction error distribution, and thus on the frequency domain residue distribution.

Different from existing adaptive quantization schemes, this invention proposes to define a plurality of quantization matrices for the quantization of different intra prediction modes, and the encoder and decoder adaptively select the quantization matrices according to the intra prediction mode of the current block.

In one aspect of the invention, the new quantization method is applied to residuals. The proposed method adaptively selects quantization matrices for different macroblocks based on the probability distribution statistics, and assigns different quantization matrices for different blocks according to their respective intra prediction modes.

According to the invention, a method for quantizing or inverse quantizing frequency domain parameters that refer to a residual (the residual is the difference between a current image and a predicted image), wherein the predicted image used for generating the residual was obtained by spatial intra prediction using an intra-prediction direction, comprises that one of a plurality of different quantization matrices is selected and used for quantizing or inverse quantizing said parameters, wherein the selection depends on the intra-prediction direction that was used.

A corresponding device for quantizing or inverse quantizing frequency domain parameters that refer to a residual image, wherein the predicted image from which the residual image was generated was obtained by spatial intra prediction using an intra-prediction direction, comprises means for selecting one of a plurality of different quantization matrices, wherein the selection depends on the intra-prediction direction that was used, and means for quantizing or inverse quantizing said parameters using the selected quantization matrix.

According to another aspect of the invention, a method for video encoding comprises the steps of predicting an original image using spatial intra prediction, wherein an intra-prediction direction is defined, calculating a residual being the difference between the predicted and the original image, transforming the residual into the frequency domain, wherein first parameters are obtained, and quantizing the first parameters using one of a plurality of different quantization matrices, wherein the quantization matrix to be used is determined depending on the intra-prediction direction.

A corresponding device for video encoding comprises means for predicting an original image using spatial intra prediction, wherein an intra-prediction direction is defined, means for calculating a residual being the difference between the predicted and the original image, means for transforming the residual into the frequency domain, wherein first parameters are obtained, and means for quantizing the first parameters using one of a plurality of different quantization matrices, wherein the quantization matrix to be used is determined depending on the intra-prediction direction.

According to yet another aspect of the invention, a method for video decoding comprises the steps of receiving a bit stream comprising an encoded video image, determining that the received video image was intra coded, wherein a spatial intra-prediction direction was used, determining said intra-prediction direction and one of a plurality of different predefined de-quantization matrices, inverse quantizing the received encoded video image using the determined de-quantization matrix, and inverse transforming the de-quantized received video image, wherein said determining of the de-quantization matrix depends on the determined intra-prediction direction.

A corresponding device for video decoding comprises means for receiving a bit stream comprising an encoded video image, means for determining that the received video image was intra coded, wherein a spatial intra-prediction direction was used, means for determining said intra-prediction direction and one of a plurality of different predefined de-quantization matrices, means for inverse quantizing the received encoded video image using the determined de-quantization matrix, and means for inverse transforming the de-quantized received video image, wherein said determining of the de-quantization matrix depends on the determined intra-prediction direction.

In one embodiment, the quantization matrix for horizontally and/or vertically predicted images is asymmetric, so that at least one matrix coefficient $c_{i,j}$ is different from the matrix coefficient $c_{j,i}$ if $i \neq j$.

In one embodiment, for images with horizontal prediction direction the quantization is finer for horizontal structures than for vertical structures. Correspondingly, for images with vertical prediction direction the quantization is finer for vertical structures than for horizontal structures.

In one embodiment, a first asymmetric quantization matrix is used for horizontally predicted images, a different second asymmetric quantization matrix is used for vertically predicted images and a third, symmetric quantization matrix is used for all other spatially predicted images.

In one embodiment, the selection of a quantization matrix is performed on macroblock level.

Advantageous embodiments of the invention are disclosed in the dependent claims, the following description and the figures.

Brief description of the drawings

Exemplary embodiments of the invention are described with reference to the accompanying drawings, which show in

Fig.1 a block diagram of an encoder and a decoder for images;
Fig.2 different intra prediction modes in H.264;

Fig.3 a flow chart for a video encoder; and
Fig.4 a flow chart for a video decoder.

Detailed description of the invention

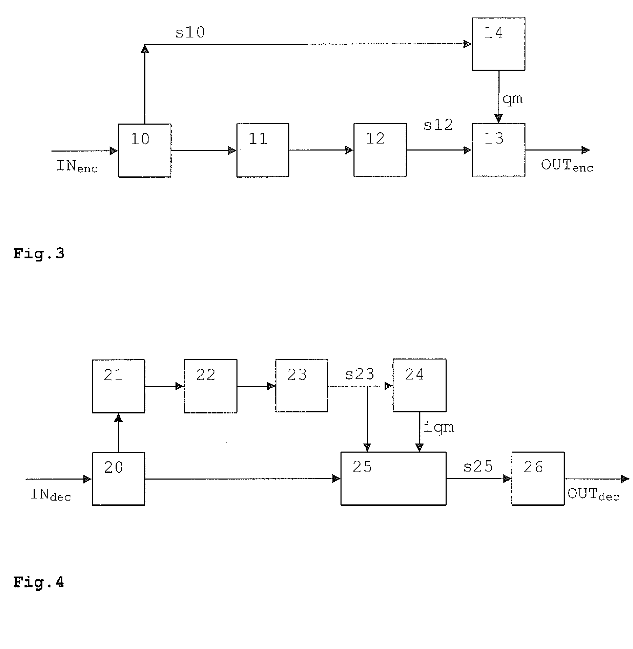

Fig.3 shows a flowchart of a method for video encoding according to one embodiment of the invention. An encoder input signal $IN_{enc}$ contains a video image, on which spatial intra prediction is performed in block 10. During this process, an intra prediction direction is defined that is used for the spatial intra prediction. It may be one of the directions known from MPEG, corresponding to the different modes shown in Fig.2. An intra prediction direction indication s10 is generated and added to the bit stream. Additionally, other encoding modes may be chosen, e.g. inter coding. In this case, the intra prediction direction indication s10 indicates also whether or not intra prediction was used.

Then a residual is calculated 11. Residuals are commonly understood as being the difference between a predicted and an original image.

The residual is transformed 12 into the frequency domain, wherein first parameters s12 are obtained. Commonly a DCT is used here to obtain frequency domain coefficients. However, similar transforms can be used as well.

The first parameters s12 are quantized 13, wherein one of a plurality of different quantization matrices qm is used. The quantization block provides an output signal $OUT_{enc}$ e.g. towards an entropy encoder. This quantization matrix to be used is determined 14 depending on the intra prediction direction. That means generally that if two picture elements, e.g. MBs or slices, use different intra prediction directions, then also different quantization matrices are used for them. In other words, in this embodiment each intra prediction direction has a corresponding quantization matrix assigned. This has the advantage of optimized compression efficiency of the quantization, since redundancy (as shown above) is reduced.

The decoder has the respective inverse quantization matrices available, and can find out from the indication of the intra prediction mode which inverse quantization matrix to apply for a picture element. This indication is added on the encoder side anyway. Thus, an advantage of the invention is that no additional indication of the utilized quantization matrix (or the required inverse quantization matrix) has to be encoded or transmitted.

However, in one embodiment of the invention only some intra-prediction directions have individual quantization matrices assigned. In one embodiment these are only the horizontal and the vertical prediction directions (mode_0 and mode_1 in Fig.2). The other prediction modes use a default quantization matrix. This has the advantage that the compression efficiency is improved compared to known methods, while the amount of different quantization matrices that the decoder has to apply is limited. Thus, the burden of storing many different quantization matrices in the decoder is reduced.

In another embodiment, also other modes have individual quantization matrices assigned, namely those that use spatial intra prediction in a not purely diagonal pattern. E.g. in Fig.2 these are vertical-right (mode_5), vertical-left (mode_7), horizontal-down (mode_6) and horizontal-up (mode_8). Thus, the decoder needs to provide seven different inverse quantization matrices, six for the mentioned modes and one as default for the remaining intra prediction modes. Further variations according to different block sizes (see below embodiments) are possible.

Fig.4 shows a flowchart of a method for video decoding according to one embodiment of the invention. First, a bit stream comprising an encoded video image is received 20 as decoder input signal $IN_{dec}$. The decoder has means for determining 21 that the received video image was intra coded, wherein a spatial intra-prediction direction was used. This can be determined from an indication that is provided within the bit stream. In the next step, the intra-prediction direction is determined 23 (this may be done in the same step in some implementations). According to the determined intra prediction direction, one of a plurality of different predefined de-quantization matrices is determined 24. These may be standardized or have been previously transmitted. Further, the matrices may be locally stored or dynamically generated, e.g. according to a predefined or received algorithm.

The next step comprises inverse quantizing 25 the received encoded video image using the determined de-quantization matrix iqm. Note that de-quantization and inverse quantization are used synonymously herein.

Then, the de-quantized received video image s25 is inversely transformed 26, e.g. by an iDCT. The inverse transform block 26 provides the decoder output signal $OUT_{dec}$. Said determining 24 of the de-quantization matrix iqm depends on the determined intra-prediction direction s23. That means that for different intra-prediction direction indications s23 different de-quantization matrices are used. In particular, the relationship is defined to be the same that was used for encoding.

Thus, in one embodiment three different de-quantization matrices are used, while in another embodiment seven different de-quantization matrices are used. Again, further variations according to different block sizes (see below embodiments) are possible.

In the following, more details on the quantization matrices are given.

Other than $WS_{Flat}$ and $WS_{MatrixA}$ in eq. (1), we propose usage of non-diagonal symmetric quantization matrices specifically for the above-mentioned intra prediction modes.

In one embodiment, a quantization matrix for the 4x4 intra prediction mode_0 (vertical prediction) of H.264 is defined as:

| 16 | 16 | 19 | 19 |
|----|----|----|----|
| 19 | 19 | 21 | 22 |
| 21 | 21 | 23 | 23 |
| 23 | 24 | 26 | 26 |

The main aspect here is that the coefficients that are used for quantizing the vertical structures are smaller than their counterparts that are used for quantizing horizontal structures (e.g. $c_{0,2}$=19 is smaller than $c_{2,0}$=21). This has the effect that for images with vertical prediction direction the quantization is finer for vertical structures than for horizontal structures. Thus, vertical structures in the reconstructed image will have better quality.

It should be noted that the non-diagonal symmetric quantization matrices shown above and in the following paragraphs should replace the "flat matrices" of ref.[1], which have all elements equal to 16, both in 4x4 and 8x8 mode.

In one embodiment, a quantization matrix for the 4x4 intra prediction mode_1 (horizontal prediction) of H.264 is defined as:

| 16 | 19 | 21 | 23 |
|----|----|----|----|
| 16 | 19 | 21 | 24 |
| 19 | 21 | 23 | 26 |
| 19 | 22 | 23 | 26 |

Vice versa to the above, the main aspect here is that the coefficients that are used for quantizing the horizontal structures are smaller than those that are used for quantizing vertical structures (e.g. $c_{3,0}$=19 is smaller than $c_{0,3}$=23). This has the effect that for images with horizontal prediction direction the quantization is finer for horizontal structures than for vertical structures. Thus, horizontal structures will be reconstructed with better quality.

For other 4x4 intra prediction modes in H.264, the proportion of MBs using these modes is statistically usually less than half. Therefore, allocating different exclusive quantization matrix to each of the other modes may not be so effective, but introduce some complexity. For simplicity, one symmetric or slightly asymmetric quantization matrix is defined for all the other intra prediction modes e.g. as for mode_0:

| 16 | 18 | 20 | 20 |
|----|----|----|----|
| 18 | 20 | 21 | 22 |
| 21 | 21 | 22 | 24 |
| 22 | 22 | 24 | 26 |

Alternatively, different quantization matrices can be defined for some of or all the different intra prediction modes in other embodiments, as mentioned above.

The invention refers to both, encoder and decoder. When encoder or decoder conduct quantization or inverse quantization on a current intra coded block, then the corresponding quantization/de-quantization matrix is selected according to the intra prediction mode of the current block. No extra block level header bits are needed because the de-quantization matrix can be decided by the corresponding intra prediction mode, which is usually indicated in the coded bit stream.

In the following, embodiments for the case of 8x8 intra prediction and 8x8 transform is described.

For the 8x8 intra prediction mode_0 (vertical prediction) of H.264, a quantization matrix is exemplarily defined as:

| 16 | 16 | 17 | 17 | 18 | 18 | 19 | 20 |
|----|----|----|----|----|----|----|----|
| 17 | 18 | 18 | 19 | 19 | 20 | 20 | 21 |
| 18 | 19 | 19 | 20 | 20 | 21 | 22 | 22 |
| 20 | 21 | 22 | 22 | 23 | 23 | 24 | 24 |
| 21 | 22 | 23 | 23 | 24 | 24 | 25 | 25 |
| 22 | 23 | 24 | 25 | 26 | 27 | 27 | 28 |
| 24 | 24 | 25 | 26 | 27 | 28 | 29 | 29 |

(continued)

| 25 | 25 | 26 | 27 | 28 | 29 | 30 | 30 |

For the 8x8 intra prediction mode_1 (horizontal prediction) of H.264, a quantization matrix is exemplarily defined as:

| 16 | 17 | 18 | 19 | 20 | 22 | 24 | 25 |
| 16 | 18 | 19 | 21 | 22 | 23 | 24 | 25 |
| 17 | 18 | 19 | 22 | 23 | 24 | 25 | 26 |
| 17 | 19 | 20 | 22 | 23 | 25 | 26 | 27 |
| 18 | 19 | 20 | 23 | 24 | 26 | 27 | 28 |
| 18 | 20 | 21 | 23 | 24 | 27 | 28 | 29 |
| 19 | 20 | 22 | 24 | 25 | 27 | 29 | 30 |
| 20 | 21 | 22 | 24 | 25 | 28 | 29 | 30 |

Like the proposal for the other prediction modes for 4x4 intra prediction, for H.264/AVC other 8x8 intra prediction modes, a quantization matrix with diagonal symmetry is defined as:

| 16 | 16 | 17 | 17 | 18 | 19 | 20 | 21 |
| 16 | 17 | 17 | 18 | 19 | 20 | 21 | 22 |
| 17 | 17 | 18 | 19 | 20 | 21 | 22 | 23 |
| 17 | 18 | 19 | 20 | 21 | 22 | 23 | 24 |
| 18 | 19 | 20 | 21 | 22 | 23 | 24 | 25 |
| 19 | 20 | 21 | 22 | 23 | 24 | 25 | 26 |
| 20 | 21 | 22 | 23 | 24 | 25 | 26 | 28 |
| 21 | 22 | 23 | 24 | 25 | 26 | 28 | 30 |

The same principles apply as described for the 4x4 block embodiments.

Different quantization matrices can be defined for all the different intra prediction modes in other embodiments.

When encoder or decoder conduct quantization or inverse quantization on a current intra coded block, the corresponding quantization/de-quantization matrix is selected according to the intra prediction mode of the current block.

The proposed prediction based quantization method can also be combined with the sequence level, picture level, slice level, or macroblock level adaptive quantization. Different from the existing adaptive quantization, the quantization matrix is defined and selected based on the prediction mode. Advantageously, no extra header bits need to be introduced.

In principle, the adaptive quantization matrix selection method can also be used to categorize different inter prediction modes, if the probability distribution of the frequency coefficients shows a dependency on prediction direction. However, the invention is particularly useful for directional intra prediction, since when vertical prediction is used, higher horizontal frequency components are left, and vice versa. This happens not only because of intra prediction itself, but also because of the intra mode selection by rate-distortion optimization (RDO).

Generally, blocks with vertical textures (containing more horizontal frequency components) will be selected to be coded in vertical prediction mode by RDO. However, after the vertical prediction, there are still more horizontal frequency components (upmost row of coefficients) left in the residue. This is the result of Table 2. Consequently, for blocks with vertical textures, which are more likely to be coded with vertical prediction, the quantization is finer (smaller quantization steps) for horizontal frequency components in order to keep more of the horizontal frequency components, and vice versa. On the other hand, "horizontal structures" in an image means "more vertical frequency components", and these parts will be selected to be coded in horizontal prediction mode. For images with horizontal prediction direction the quantization according to the invention is finer for vertical frequency components (leftmost column of coefficients).

It will be understood that the present invention has been described purely by way of example, and modifications of detail can be made without departing from the scope of the invention.

Each feature disclosed in the description and the claims and drawings may be provided independently or in any appropriate combination. Features may, where appropriate be implemented in hardware, software, or a combination of the two. Reference numerals appearing in the claims are by way of illustration only and shall have no limiting effect on the scope of the claims.

**Claims**

1. A method for quantizing or inverse quantizing frequency domain parameters that refer to a residual, the residual being the difference between a current image and a predicted image, wherein the predicted image was obtained by spatial intra prediction using an intra-prediction direction,
   **characterized in that**

   - one of a plurality of different quantization matrices is selected and used for quantizing or inverse quantizing said parameters, wherein the selection depends on the intra-prediction direction that was used.

2. A method for video encoding, comprising the steps of

   - predicting (10) an original image using spatial intra prediction, wherein an intra-prediction direction (s10) is defined;
   - calculating (11) a residual being the difference between the predicted and the original image;
   - transforming (12) the residual into the frequency domain, wherein first parameters (s12) are obtained;
   - quantizing (13) the first parameters using one of a plurality of different quantization matrices,
   **characterized in that**
   - the quantization matrix to be used (qm) is determined (14) depending on the intra-prediction direction.

3. Method according to claim 1 or 2, wherein the quantization matrix for horizontally and/or vertically predicted images is asymmetric.

4. Method according to claim 1, 2 or 3, wherein for images with horizontal prediction direction the quantization is finer for horizontal structures than for vertical structures.

5. Method according to one of the claims 1-4, wherein a first asymmetric quantization matrix is used for horizontally predicted images, a different second asymmetric quantization matrix is used for vertically predicted images and a third, symmetric quantization matrix is used for all other spatially predicted images.

6. Method according to one of the claims 1-5, wherein the selection of a quantization matrix is performed on macroblock level.

7. A method for video decoding, comprising the steps of

   - receiving (20) a bit stream comprising an encoded video image;
   - determining (21) that the received video image was intra coded, wherein a spatial intra-prediction direction was used;
   - determining (23) said intra-prediction direction;
   - determining (24) one of a plurality of different predefined de-quantization matrices;
   - inverse quantizing (25) the received encoded video image using the determined de-quantization matrix (iqm); and
   - inverse transforming (26) the de-quantized received video image (s25);
   **characterized in that**
   - said determining (24) of the de-quantization matrix (iqm) depends on the determined intra-prediction direction (s23).

8. Method according to claim 7, wherein the determining said intra-prediction direction comprises extracting an indication from the received bit stream.

9. Method according to claim 7 or 8, wherein a first asymmetric de-quantization matrix is used for horizontally predicted images, a different second asymmetric de-quantization matrix is used for vertically predicted images and a third, symmetric de-quantization matrix is used for all other spatially predicted images.

10. A device for performing quantization or inverse quantization of frequency domain parameters that refer to a residual, the residual being the difference between a current image and a predicted image, wherein the predicted image was obtained by spatial intra prediction using an intra-prediction direction, **characterized in that** the device comprises

- means for selecting one of a plurality of different quantization matrices to be used for quantizing or inverse quantizing said parameters, wherein the selection depends on the intra-prediction direction that was used.

**Fig.1**

**Fig.2**

**Fig.3**

**Fig.4**

**European Patent Office**

**EUROPEAN SEARCH REPORT**

Application Number

EP 07 30 1436

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 718 080 A (NIPPON ELECTRIC CO [JP]) 2 November 2006 (2006-11-02) * figure 3 * * page 2, lines 38-40 * * page 12 * * page 5, lines 11-13 * ----- | 1-5,7-10 | INV. H04N7/34 H04N7/50 H04N7/26 |
| X | JIANWEN CHEN ET AL: "Macroblock-Level Adaptive Frequency Weighting" MULTIMEDIA AND EXPO, 2007 IEEE INTERNATIONAL CONFERENCE ON, IEEE, PI, 1 July 2007 (2007-07-01), pages 304-307, XP031123622 ISBN: 978-1-4244-1016-3 * page 306, right-hand column, lines 12,13 * * page 305, right-hand column, lines 27-29 * * page 306, left-hand column, lines 18-32 * * page 305, left-hand column, lines 1-3 * * page 306, left-hand column, lines 2-12 * ----- | 1,2,5-10 | |
| A | US 2007/104270 A1 (SONG BYUNG-CHEOL [KR] ET AL) 10 May 2007 (2007-05-10) * abstract * * page 1, column 1, lines 17-19 * * page 2, column 1, lines 1-4 * * page 6, column 2, lines 24-34,46-52 * ----- | 1-10 | TECHNICAL FIELDS SEARCHED (IPC) H04N |
| A | "Proposal of Quantization weighting for H.264/MPEG-4 AVC Professional Profiles, JVT-K029" JOINT VIDEO TEAM (JVT) OF ISO/IEC MPEG & ITU-T VCEG(ISO/IEC JTC1/SC29/WG11 AND ITU-T SG16 Q6), XX, XX, 1 March 2004 (2004-03-01), pages 1-10, XP003017718 * the whole document * ----- | 1-10 | |

The present search report has been drawn up for all claims

| Place of search | Date of completion of the search | Examiner |
|---|---|---|
| Munich | 29 July 2008 | Le Guen, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 07 30 1436

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2008

| Patent document cited in search report | | Publication date | Patent family member(s) | | Publication date |
|---|---|---|---|---|---|
| EP 1718080 | A | 02-11-2006 | CN | 1922886 A | 28-02-2007 |
| | | | WO | 2005081540 A1 | 01-09-2005 |
| | | | KR | 20060118593 A | 23-11-2006 |
| | | | TW | 255651 B | 21-05-2006 |
| | | | US | 2007140333 A1 | 21-06-2007 |
| US 2007104270 | A1 | 10-05-2007 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. LU ; T. CHEN et al.** Proposal of quantization weighting for H.264/MPEG-4 AVC Professional Profiles. *JVT-K029r1,* March 2004
- **A. TANIZAWA ; T. CHUJOH.** Adaptive Quantization Matrix Selection. *ITU-T Q.6/SG16 VCEG,* April 2006, D.266
- **A. TANIZAWA ; T. CHUJOH.** Simulation results of Adaptive Quantization Matrix Selection on KTA software. *ITU-T Q.6/SG16 VCEG-AC07,* July 2006
- **X. FAN ; Y. LU ; W. GAO.** A novel coefficient scanning scheme for directional spatial prediction-based image compression. *ICME,* 2003